# NEW EUROPEAN PATENT SPECIFICATION

(11) **EP 2 526 656 B2**
(45) Date of publication and mention of the opposition decision: **13.05.2020**
(45) Mention of the grant of the patent: 07.05.2014
(21) Application number: 11703916.4
(22) Date of filing: 17.01.2011
(51) Int. Cl.: H04L 12/413, H05B 37/02

(54) **METHOD AND APPARATUS FOR SEARCHING FOR VALUES OF ONE OR MORE PARAMETERS AND RELATED DEVICES**
VERFAHREN UND VORRICHTUNG ZUM SUCHEN VON WERTEN EINES ODER MEHRERER PARAMETER UND ZUGEHÖRIGE VORRICHTUNGEN
PROCÉDÉ ET APPAREIL DE RECHERCHE DE VALEURS DE PARAMÈTRES ET DISPOSITIFS CORRESPONDANTS

(30) Priority: 22.01.2010 GB 201000996
(43) Date of publication of application: 28.11.2012
(73) Proprietor: Simm Tronic Limited, Hoddesdon, Hertfordshire EN11 0QR (GB)
(72) Inventor: VOS, Raymond, Arthur, Brox Bourne Hertfordshire EN10 7TJ (GB)
(74) Representative: Flint, Adam
(86) International application number: PCT/GB2011/000048
(87) International publication number: WO 2011/089380

(56) References cited:
- WO-A1-2008/030315
- DE-B4- 19 549 815
- US-A- 5 968 154
- US-A1- 2004 217 718
- HUADONG LI ET AL: "Development and research of lighting system based on DALI", INDUSTRIAL ELECTRONICS AND APPLICATIONS, 2008. ICIEA 2008. 3RD IEEE CONFERENCE ON, IEEE, PISCATAWAY, NJ, USA, 3 June 2008 (2008-06-03), pages 1302-1307, XP031293936, ISBN: 978-1-4244-1717-9

## Description

The present invention relates to a method of and apparatus for searching for values of one or more parameters held by one or more of a plurality of devices and also relates to a device capable of storing a value of a parameter and disclosing the value on request.

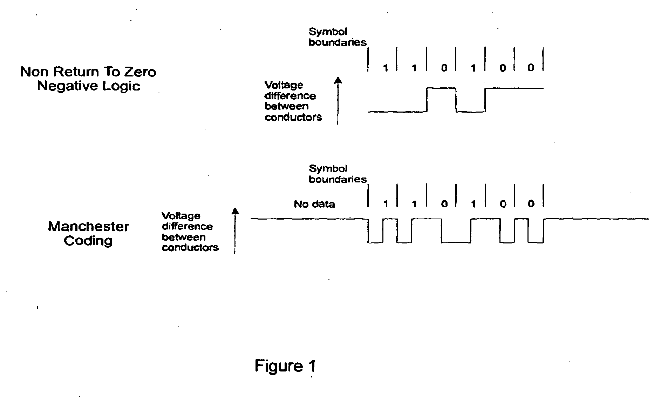

In many systems, serial links are used to connect devices together. Examples of such systems include those used to control and monitor the operation of a building, for example the lighting, air conditioning, fire detection or security mechanisms within a building. Devices in such a system might include actuators that turn individual lights or heaters on and off, sensors that detect ambient light or temperature levels or the presence of people within an area in the building, and computing engines that process the information from sensors to determine the desired settings of actuators. A serial link is a means of exchanging data between two or more devices, a single symbol at a time. A common embodiment of a serial link is a pair of electrical conductors, the voltage difference between which is used to encode binary symbols (commonly referred to as '1' and '0'). Common methods for encoding binary symbols on a serial link include 'non return to zero' and 'Manchester code', examples of which are shown schematically in Figure 1. In such an embodiment, all devices are normally aware of the signalling period, that is to say the time taken to encode a binary symbol on the serial link. This may be known a *priori* or one device may learn the signalling period for example by decoding a transmission by another device.

In the case of non return to zero encoding, one of two voltage differences is maintained for a complete signalling period, to indicate a '1' or '0'. The example shown in Figure 1 is commonly described as 'Negative Logic', since a '1' is represented by the lower of two voltage differences. In the case of Manchester Code, a change of voltage difference occurs at the midpoint of each signalling period; the direction of that change in difference indicates a '1' or '0'. Serial links may operate in a synchronous manner, that is to say where at least one device is driving the link ("transmitting") at any time, generating symbols in such a way as to maintain a regular signalling interval. Serial links may also operate in an asynchronous manner, in which the link is not driven all the time. Such a case is shown in Figure 1 for Manchester code. When the link is not driven, there are no significant changes of voltage level; the start of transmission is marked by a significant change of voltage level. Serial links may operate with a "bias", that is to say that the link is normally held at one voltage level by one or more devices or some other equipment attached to the link; the biasing circuit is such that a device that requires to drive the link to one of the voltage levels indicating '1' or '0' will succeed in doing so in preference to the bias. Where the bias is one of the voltage levels indicating '1' or '0', a device that requires to drive the link to one of the voltage levels does so only when the other voltage level is required.

Other common embodiments of a serial link include wireless links, for example radio links. For example, both of the symbol encodings shown in Figure 1 can be conveyed over the medium of radio by replacing the lower voltage difference level by emission of a radio signal and the higher voltage difference level by no such emission. It will be understood that many different radio modulation and signalling techniques are known; an example of a suitable technique would be for each device to emit a continuous carrier frequency as a replacement for the lower voltage difference level, the carrier frequency used by each device being slightly different in order to avoid anti-phase cancellation at any receiving device.

In an arrangement where two or more devices are connected using a serial link, a need often arises for one such device to learn the values of a parameter held by one or more other devices. Such a parameter value will typically be held by a device as a single value from a discrete set of possible values. In some cases, the parameter will be a sparse parameter, that is to say a parameter that may take one of a very large number of values, and where significantly fewer instances of such values are held by the devices. Some commonly encountered examples of sparse parameters are "MAC address" numbers specified in ISO 8802.1 for identification of computer communication devices. These are taken from a range of 2⁴⁸ different numbers, while a typical system may incorporate from two to a few hundred devices. The number space specified in ISO 16484-5 for assigning a unique identifier to a device is a range of 2²² different numbers and ISO 16484-5 also further defines a MAC address number per device in a range of up to 2⁴⁸ different numbers. The number space specified in IEC 62386-102 for assigning unique numbers to lighting control devices is a range of up to 2¹²⁸ different numbers. Also under IEC 62386-102 a lighting control device may be instructed to pick and retain a random number from a range of 2²⁴ different numbers. These are all examples of sparse parameters: in these particular cases, each device holds only one such value and significantly fewer devices are present on the serial link than the set of possible values.

US5968154 discloses a method of arbitrating between a number of devices which are attempting to access a serial data bus.

US2004-0217718A1 discloses a digitally addressable electronic ballast and control unit. An address search technique according to a DALI (Digital Addressable Lighting Interface) standard is described.

According to a first aspect of the present invention, there is provided a method of learning values of one or more parameters held by a plurality of lighting control devices that are capable of communication with each other via a serial communications link, the method comprising:
(A) one of said lighting control devices issuing a request over the serial communications link for said lighting control devices to disclose over the serial communications link a value of a parameter held by the devices; and,
(B) in response thereto, each of the devices that hold such a value and that have been requested to disclose the value attempting to disclose the value held by the device, while monitoring for attempts by other devices to disclose values held by the other devices, each device operating a comparator rule whereby if a device learns that another of the devices is transmitting a value that is preferred to the value that is being transmitted by said device, then said device ceases transmitting its value, so that at most one value is disclosed in response to each request; and
   repeating (A) and (B) such that a plurality of said devices that hold such a value and that have been requested to disclose the value have disclosed the value such that said requesting device learns the values of the parameter held by said plurality of devices.

In a preferred embodiment, one or more devices are connected together using a serial link. Each device is able to transmit on the serial link at times of its own choosing; furthermore, each device is able to detect the resultant signals due to one or more devices transmitting on the serial link at times of their own choosing. The effect resulting in a case where more than one device transmits on the serial link at the same time is known by all devices, as is the effect resulting in a case where no device transmits on the serial link. As a result, at most one value is disclosed in response to each request. This can be achieved very quickly compared to corresponding prior art techniques of learning the values of parameters held by devices.

In general, for any given parameter, each device may hold zero, one or more instances of values of that parameter. One or more devices can learn the parameter values held by one or more devices connected using the serial link.

A "preferred" value may for example be one that is greater than the value held by the device concerned.

In an embodiment, each device operates a comparator rule whereby if a device holds plural values for a parameter, the device transmits a preferred one of said values in response to the request. A "preferred" value may be for example one that is the greatest of the values held by the device concerned. This enables a particularly efficient and therefore rapid transmission scheme, by which all devices disclose their relevant values, to be achieved.

In an embodiment, the request for said devices to disclose a parameter held by the devices includes or is accompanied by a restriction on the devices that are to respond to said request such that only a subset of the devices respond to said request.

In an embodiment, the values held by the devices may be represented by a number of bits that varies between the devices, and wherein the devices insert bits into the values transmitted by the devices such that the bit values that are transmitted by the devices are all of the same length.

In an embodiment, the values held by the devices may be represented by a number of bits that varies between the devices, and wherein the devices insert one or more bit patterns into the values transmitted by the devices to indicate the presence or length of optional sub-sequences within the overall bit pattern transmitted by the devices.

In general, these embodiments provide a simple way of allowing any bit sequence held by any device to be disclosed in a way that can be understood by other devices.

In an embodiment, the value is encoded as a binary number, the most significant bit being placed on the serial link first.

In an embodiment, each device is able to recognise during a symbol period when some other device has a superior bit to transmit and a device that would otherwise transmit an inferior bit does not prevent other devices from detecting the transmission of the superior bit. Again, this enables a particularly efficient and therefore rapid transmission scheme, by which all devices disclose their relevant values, to be achieved.

In an embodiment, the devices employ "Manchester Coding" bit encoding. As an alternative, the devices employ "non return to zero" bit encoding.

In an embodiment, a parameter to be disclosed is an IEC 62386-102 random number. In an alternative, a parameter to be disclosed is a compound value consisting of plural elements. As another alternative, a parameter to be disclosed is a compound value consisting of an IEC 62386-102 random number and an IEC 62386-102 short address.

In an embodiment, the devices are discrete devices distributed around a building. Such devices may be for example for controlling and monitoring the operation of a building, for example the lighting. Devices in such a system might include actuators that turn individual lights or heaters on and off, sensors that detect ambient light or temperature levels or the presence of people within an area in the building, and computing engines that process the information from sensors to determine the desired settings of actuators.

According to a second aspect of the present invention, there is provided apparatus comprising a plurality of discrete lighting control devices that are distributed around a building and capable of communication with each other via a serial communications link, wherein the lighting control devices are arranged such that:
at least one of said devices is able to issue a request over the serial communications link for said devices to disclose over the serial communications link a value of a parameter held by the devices; and,
in response thereto, each of the devices that hold such a value and that have been requested to disclose the value attempts to disclose the value held by the device, while monitoring for attempts by other devices to disclose values held by the other devices, each device operating a comparator rule whereby if a device learns that another of the devices is transmitting a value that is preferred to the value that is being transmitted by said device, then said device ceases transmitting its value, so that at most one value is disclosed in response to each request;
said at least one of said devices being arranged to repeat said request over the serial communications link for said devices to disclose over the serial communications link a value of a parameter held by the devices such that a plurality of said devices that hold such a value and that have been requested to disclose the value have disclosed the value;
thereby enabling one or more of the devices to learn the values of the parameter held by a plurality of the devices.

Embodiments of the present invention will now be described by way of example with reference to the accompanying drawings, in which:
Figure 1 shows schematically the encoding of binary symbols on a serial link using 'non return to zero' and 'Manchester code' encoding;
Figure 2 shows schematically signal transmission on a communications link during operation of an embodiment of the present invention using Manchester code; and,
Figure 3 shows schematically signal transmission on a communications link during operation of an embodiment of the present invention using non return to zero code.

In an embodiment of the present invention, plural devices communicate with each other via a serial communications link, which in general may be wired or wireless. The devices may be discrete devices, which may be distributed around a building for example. Examples of systems using such an arrangement include those used to control and monitor the operation of a building, for example the lighting. Devices in such a system might include actuators that turn individual lights or heaters on and off, sensors that detect ambient light or temperature levels or the presence of people within an area in the building, and computing engines that process the information from sensors to determine the desired settings of actuators. As a particular example, fluorescent lights typically employ a digital ballast, which can apply quite complex logic to lamp starting and operation and enable functions such as testing for broken electrodes and missing tubes before attempting to start and auto-detection of tube replacement and tube type. They allow features such as dimming and having the ballast maintain a constant light level against changing ambient light contribution to be easily included in the embedded microcontroller software.

In operation, one device transmits on the serial link a sequence of symbols that indicate or relate to an instruction for certain or all of the devices to disclose a value that they hold for a parameter. The transmission may include any or all of the following information:
the instruction to disclose a value;
information identifying the parameter whose value is to be disclosed. This is applicable where there is more than one different parameter whose value can be disclosed by a device;
the number of symbols to be used by the disclosing device(s) to encode the parameter. This is useful in the case that different devices hold values for the same parameter that are selected from a different range of discrete values. Optionally the request may require only those values that can be encoded in the specified number of symbols to be disclosed;
a restriction on the devices that should report the values that they hold. Using the examples given above, an IEC 62386-102 lighting control device might be requested to report its random number only if that random number lies in a specified range of numbers or if its unique number lies in a specified range of numbers. The restriction may also be expressed in negative terms. For example a device might be requested to report a parameter value only if the value does not lie in a specified range of numbers.

An instruction to disclose a value may incorporate other information in the list above. Alternatively the instruction may be preceded by other information in the list, transmitted in one or more separate sequences of symbols. The applicability of information transmitted as separate sequences of symbols may vary. For example it may be indicated as applying to the next disclosure instruction, to all further disclosure instructions until revoked or for some defined number of following disclosure instructions.

As a specific example, a device wishing to learn the IEC 62386-102 random numbers held by all other devices may transmit the following sequence of messages on the serial link:
Parameter required is IEC 62386-102 random number, until revoked
All devices holding such a parameter shall report it, until revoked
Disclose a value - whereupon one device discloses value *x*
Device holding the value *x* shall not report it, until revoked
Disclose a value - whereupon one device discloses value *y*
Device holding the value *y* shall not report it, until revoked
and so on.

In this example, each directive that applies until revoked is defined to modify but not to revoke any previous conflicting directives. Hence at the end of the sequence above, all devices holding an IEC 62386-102 random number whose value is neither *x* nor *y* would be entitled to disclose it.

Upon receiving an instruction to disclose a value, each device first determines whether it has at least one value that it is entitled to disclose, taking into account any stipulations in and preceding the disclosure instruction. In one embodiment, if the device has at least one such value, it uses the following procedure to ensure that no more than one such value is disclosed on the serial link at one time.

For each parameter, the device holds a comparator rule and a serial encoding rule. As examples, for a parameter whose possible range of discrete values are integers in the range 0 to 2⁸-1, a device may hold a comparator rule which is to disclose the numerically highest value and a serial encoding rule which is to encode the value as an 8-bit binary number, the most significant bit being placed on the serial link first. (As a simple alternative, a device may hold a serial encoding rule which is to encode the value as an 8-bit binary number, the least significant bit being placed on the serial link first, and a comparator rule which is to disclose its value only if there is no bit position at which the device would disclose a '1' and at which some other device would disclose a '0'.)

If the device holds more than one value that it is entitled to disclose, it first uses the comparator rule to select one such value. The device then begins to drive the line with symbols as defined by the encoding rule. As it drives the line, it also monitors for other devices driving the line and thus learns whether any other device is disclosing a value that is preferred, according to the comparator rule, to the value that it is attempting to disclose.

In the event that the device learns that another device is disclosing a value that is preferred according to the comparator rule, the device immediately stops its own disclosure. Otherwise it continues until the value is fully disclosed.

There now follows a specific example of disclosure and comparison by the devices using Manchester Coding. This example uses the comparator rule and the serial encoding rule for an 8-bit binary number given as examples above and uses the style of Manchester encoding shown in Figure 1. A device drives the voltage difference down in the first half of a symbol to indicate '1'; it drives the voltage difference down in the second half of a symbol to indicate '0'.

The disclosure sequence preferably begins with a 'start symbol'. This is a symbol that immediately precedes disclosure of the first symbol of the requested value. The start symbol may be the last symbol of the disclosure instruction message. Alternatively the requesting device may transmit a set of one or more symbols some time after the disclosure instruction message, the last symbol of which serves as the start symbol. Alternatively each device holding at least one value that it is entitled to disclose may be entitled to transmit the start symbol within a specified time window following the disclosure request message. In the case of this last alternative, one or more devices may transmit the start symbol before some others attempt to so do and all other devices that are entitled to disclose a value will detect this transmission as the start symbol. In an alternative embodiment, the start bit is not present; the devices begin their disclosures some measured time after some previous transmission on the link.

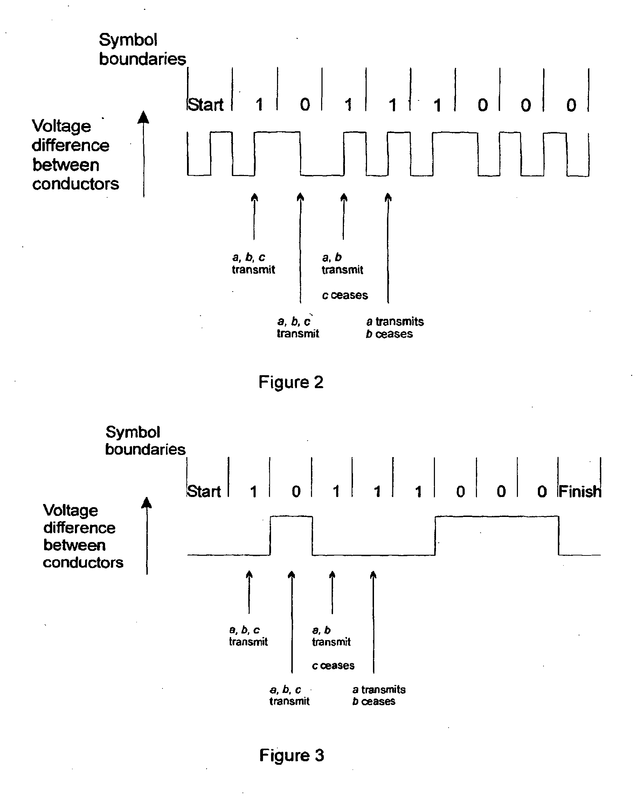

In the following example, three devices a, b and c have values to disclose: these values are 184, 168 and 136 respectively, encoded as symbol streams 10111000, 10101000 and 10001000 respectively. The behaviour of the devices is shown schematically in Figure 2.

In any symbol period, a device that wishes to transmit a '0' will see any '1' transmission in the first half of the symbol period. According to the comparator rule, a device that wishes to transmit a '0' and sees a '1' transmission learns that some other device is disclosing a preferred value and therefore immediately ceases transmission.

In the first symbol period after the start bit, *a*, *b* and *c* all have a '1' to transmit and therefore do so.

In the second symbol period after the start bit, *a*, *b* and *c* all have a '0' to transmit. No other device transmits a '1' and therefore they all transmit a '0'.

In the third symbol period after the start bit, a and *b* have a '1' to transmit and therefore do so. *c* has *a* '0' to transmit, but on seeing transmission of a '1' *c* ceases transmission.

In the fourth symbol period after the start bit, *a* has a '1' to transmit and therefore does so. *b* has a '0' to transmit, but on seeing transmission of a '1' *b* ceases transmission.

In the fifth symbol period after the start bit, *a* has a '1' to transmit and therefore does so.

In the sixth to eighth symbol periods after the start bit, *a* has a '0' to transmit. No other device transmits a '1' and therefore *a* transmits a '0'.

It will be noted that in the event that no device has a value to disclose, no transmissions will occur in the symbol period after the start bit.

There now follows a second specific example of disclosure and comparison by the devices using non return to zero encoding. This example also uses the comparator rule and the serial encoding rule for an 8-bit binary number given as examples above. The example uses negative logic. A device drives the voltage difference down during a symbol to indicate '1'; the rest of the time the voltage difference is above this level.

The disclosure sequence preferably begins with a 1 as a start symbol, according to one of the alternatives in the previous example. Again, in this example, three devices *a*, *b* and *c* have values to disclose: these are 184, 168 and 136 respectively, encoded as symbol streams 10111000, 10101000 and 10001000 respectively. The behaviour of the devices is shown schematically in Figure 3.

In any symbol period, a device that wishes to transmit a '0' will see any '1' transmission throughout the symbol period. According to the comparator rule, a device that wishes to transmit a '0' and sees a '1' transmission learns that some other device is disclosing a preferred value and therefore immediately ceases transmission.

In the first symbol period after the start bit, *a*, *b* and *c* all have a '1' to transmit and therefore do so.

In the second symbol period after the start bit, *a*, *b* and *c* all have a '0' to transmit. No other device transmits a '1' and so they remain eligible to transmit in the third symbol period.

In the third symbol period after the start bit, *a* and *b* have a '1' to transmit and therefore do so. *c* has a '0' to transmit, but on seeing transmission of a '1' *c* ceases transmission.

In the fourth symbol period after the start bit, *a* has a '1' to transmit and therefore does so. *b* has a '0' to transmit, but on seeing transmission of a '1' *b* ceases transmission.

In the fifth symbol period after the start bit, *a* has a '1' to transmit and therefore does so.

In the sixth to eighth symbol periods after the start bit, *a* has a '0' to transmit. No other device transmits a '1' and therefore a remains eligible to transmit in further symbol periods.

Since a remains eligible to transmit after the eighth symbol period, *a* transmits a further '1' as a 'finish bit'.

The purpose of the finish bit is to distinguish between the case where one device has a value to disclose and discloses 00000000, as against the case where no device has a value to disclose.

In both the encoding schemes above, each transmitter is able to recognise during a symbol period when some other transmitter has a 'superior' bit to transmit. In the examples above, a '1' is superior to a '0'. In general, this invention is applicable to any arrangement of encoding on any serial line where the encoding on the line is such that each transmitter is able to recognise during a symbol period when some other transmitter has a superior bit to transmit and where a transmitter that would otherwise transmit an 'inferior' bit does not prevent other devices from detecting the transmission of the superior bit.

There now follows a specific example of a search sequence for all values of IEC 62386-102 random number. The following example search sequence may be carried out using either of the previous encoding techniques or using any other suitable combination of symbol encoding, comparator rule and serial encoding rule. Since the IEC 62386-102 random number is an integer in the range 0 to 2²⁴-1, a suitable serial encoding rule is to encode the value as a 24-bit binary number. A suitable comparator rule for either of the previous encoding techniques is to disclose the numerically highest value and for the encoding rule to place the most significant bit on the serial link first.

A device wishing to learn the IEC 62386-102 random numbers held by all other devices may drive the serial link with the following sequence of messages. The first step may be omitted if this is the only parameter available from the devices.
Step 1: Message is 'Parameter required is IEC 62386-102 random number, until revoked'
Step 2: Message is 'All devices holding such a parameter shall report it, until revoked'
Step 3: Message is 'Disclose a value'
If no device discloses a value at Step 3, all such values have been learnt. Otherwise proceed to Step 4.
Step 4: Message is 'Device holding the value most recently reported at Step 3 shall not report it, until revoked'
Repeat from Step 3.

Note that the message at Step 4 may refer implicitly or explicitly to the value that was disclosed at Step 3.

As an alternative to making an implicit reference at Step 4, Step 4 may be omitted and Step 3 may be repeated until no device discloses a value. In this alternative case, the example above is modified so that the message at Step 2 becomes 'All devices holding such a parameter shall report it no more than once, until revoked'. The act of disclosing a value represents an implicit instruction to the device that has disclosed the value not to disclose it again, until revoked.

In general, as the devices are connected to each other via a communications link, every device is able to detect and decode the symbols transmitted by all other devices. As a result, a device *a* that wishes to learn some information may detect that another device *b* is requesting and receiving the required information. By decoding the symbols transmitted by all devices, device *a* is able to learn the information without making any disclosure requests itself. In general, both device *a* and device *b* may hold one or more values of a requested parameter. In order that device *b* may correctly learn the complete set of values by this method, device *a* shall operate as a responding device with respect to the values that it holds.

It may be that device *a* has a requirement to learn up to *n* different values of a parameter, in a circumstance where more than *n* are held by the devices. In such a case, a device *b* that requires to learn more than *n* values may observe the instructions issued by *a* and then issue further instructions thereafter to continue the learning sequence. Device *b* may take account of unrevoked instructions issued by *a* in order to minimise the instructions that it must issue. Device *a* may give an indication on the serial link that it has completed its learning sequence, thus enabling device *b* to continue the learning sequence, without preempting *a* while *a* is still issuing instructions.

As an example of an instruction applying only to the next disclosure instruction, a device *a* may previously have learnt the value of a parameter held by some other device *b* and may wish to confirm that the value is still held. For example the parameter may be a device identifier for the device. If device *a* takes advantage of some functionality realised in device *b*, it may wish to confirm regularly whether device *b* is still accessible. It can do so for example by the instructions:
Only the device holding device identifier parameter with value [*b*'s identifier] shall respond to the next disclosure instruction
Parameter required is device identifier; disclose a value.

There now follow examples of other comparator rules and serial encoding rules. In the example rules given above, a search will result in values being disclosed in descending order of value. More generally, the techniques described above can be applied to any value which can be represented as a fixed number of bits, irrespective of the interpretation of each bit. The comparator functions described above operate in a bitwise manner, so that in general they constitute a rule to prefer a '1' to a '0' at each symbol transmission. Thus, each different value represented as a bit pattern will be found if steps 3 and 4 are repeated until no more values are disclosed.

In some situations, a parameter may be held by different devices using a varying numbers of bits. For example the unique numbers assigned to lighting control equipment as specified in IEC 62386-102 may vary at the choice of individual manufacturer from 96 to 128 bits in length. Parameters held by different devices using a varying numbers of bits may be disclosed by padding the shorter representations by inserting patterns of 1 or 0 bits at defined points within the disclosure, such that all patterns are the same length. In some cases, the difference in parameter length may be related to a substructure within the parameter. For example one device has a parameter value containing sub-fields *a*, *b* and *c* while another device has a parameter value containing sub-fields *a* and *c*. In such a case, one or more bit patterns may be inserted into the messages to indicate the presence or length of optional sub-sequences within the overall bit pattern. Preferably the presence or length indicators are inserted before the sub-sequences to which they relate. In this case, it is not in general necessary for each disclosed message to be the same length. As an example, suppose that a bit sequence that may vary between 1 and 256 bits in length is delivered with an 8-bit pattern placed at its head that indicates the number of bits following in the sequence. This added pattern both provides a comparator between messages of different lengths and also enables messages of any permitted length to be disclosed and interpreted correctly.

It will be understood that the bitwise comparator rule and the variable length encoding techniques described above allow any bit sequence held by any device to be disclosed. The way in which the bit sequence is used to encode a value can in general be arranged to allow for values to be disclosed in a desired order. For example "floating point" or non-integer numbers are generally represented by a sign bit, a set of bits for a mantissa and a set of bits for an exponent. To allow such numbers to be disclosed in descending order, the sign bit should be presented first, followed by the exponent and then the mantissa. Where the number is negative, the exponent and mantissa values should be presented with each bit inverted (1 in place of 0 and 0 in place of 1). Furthermore, the mantissa and exponent should be encoded such that any changes in exponent are always more significant in multiplicative effect than any changes in mantissa. To allow such numbers to be disclosed in ascending order, the same encoding rule should be used with a bitwise comparator rule to prefer a '0' to a '1' at each symbol transmission.

It will also be understood that bit inversion can be employed in general to make a comparator function suited to the symbol encoding on a particular serial line.

In general, the preferred embodiments of the present invention relate to any case where one or more devices have one or more values of a parameter to disclose.

The parameter to be disclosed may be a compound value consisting of two or more elements, for example a temperature and a pressure measured by a device. Any compound value that can be represented as a single sequence of bits can be disclosed in the same manner as a single value.

The preferred embodiments of the present invention are applicable to cases where only the set of values of the parameter are of interest, not the identity of the devices holding them nor the number of devices holding the same value. For example, a number of devices may have measured a temperature. It may be desired to determine the range of temperatures that have been measured by the devices. In such a case, all different temperatures are disclosed; two or more devices with the same value to disclose will disclose them at the same time, since none of these devices will detect a "superior" disclosure during their own disclosures.

The preferred embodiments of the present invention are applicable to cases where the set of values of the parameter and the number of devices holding the same value are of interest, but not the identity of the devices holding them. Again for example, a number of devices may have measured a temperature. It may be desired to determine the average temperature measured by the devices. In such a case, each disclosure may be a compound value consisting of the temperature and some "tie breaker" such as a unique number held by exactly one disclosing device. This allows every temperature measurement to be disclosed exactly once.

The preferred embodiments of the present invention are applicable to cases where the set of values of the parameter and the identity of the devices holding them are both of interest. A compound value consisting of the parameter value and a unique number held by exactly one disclosing device would be disclosed in such a case.

As an indication of the advantages of the preferred embodiments of the present invention, the existing technique commonly used for searching for parameter values over a communications line is set out in IEC 62386-102, where it is described with reference to a search for 24-bit random numbers, each device holding one such number. The existing technique makes use of a "comparator register", i.e. a 24-bit value that is transmitted to all other devices by the device that requires the disclosure. The messages that are used are:
All devices shall take part in the search procedure
Here is a new value of comparator register
Any device still taking part in the search whose random number value is less than or equal to the comparator register shall respond by transmitting a defined symbol pattern
The device whose random number value equals the comparator register shall cease to take part in the search procedure.

By using these messages, 24 variations on the comparator register are set and 24 requests for response are used in order to obtain one random number value from one device. That device then ceases to take part in the search procedure and further set/request messages are used, up to 24 set/requests per further random number value obtained from a device, until all values are disclosed.

In the case of IEC 62386-102, the symbol encoding rate is 1200 symbols per second. A single disclosure using the technique and encoding rules described in IEC 62386-102 takes at least 2 seconds. Techniques according to the preferred embodiments of the present invention can generate a disclosure of a 24-bit value in 50ms using a symbol encoding rate of 1200 symbols per second. Since systems implemented in compliance with IEC 62386-102 may have 128 devices attached to a serial link, the time taken for a complete search is over 4 minutes according to IEC 62386-102 or around 6 seconds according to the preferred embodiments of the present invention.

The preferred embodiments of the present invention may readily be incorporated as an enhancement to IEC 62386-102 in such a way as to provide an enhancement to those devices that incorporate this invention but so as not to affect the behaviour of a lighting device built in conformance to IEC 62386-102 but not incorporating this invention. One way to achieve this is to use two of the command codes designated in IEC 62386-102 as "Reserved for future needs. The control gear shall not react in any way" to signal Step 3 and Step 4 as defined above. The command code used to signal Step 4 or an additional command code may also be used to indicate to a device that it should not take part in the search procedure currently defined in IEC 62386-102. Where there are plural devices, of which only some incorporate the present invention, this permits disclosure of random addresses by all devices, each disclosure in the most efficient manner supported by the device in question. A start bit for the response to Step 3 may be generated by the device that signalled Step 3, for example in the form of 1 bit signalled a defined time after the signal for Step 3. A combination of this bit plus either no response or 24 bits in response from a disclosing device will be ignored by a lighting device built in conformance to IEC 62386-102 but not incorporating this invention.

More generally, any transmission of between 1 and 34 bits, other than a sequence of 16 bits, will be ignored by a lighting device built in conformance to IEC 62386-102 but not incorporating this invention. Hence any disclosure of between 1 and 33 bits in length can be made by the method above, using more than one start bit in the case of a 15-bit disclosure. In the case where a longer disclosure is required, for example of the unique number of a lighting control device comprising up to 128 bits, the disclosure may proceed by means of the device that signalled Step 3 repeatedly generating one or more start bits, eliciting a response of up to 33 bits on each repetition of the start bit(s), until either no value or a full parameter value has been disclosed. The number of start bits may be adjusted on each repetition such as to ensure that each repetition will be ignored by a lighting device built in conformance to IEC 62386-102 but not incorporating this invention. It may be noted that at the present time, lighting devices built in conformance to IEC 62386-102 typically incorporate a computing device suitable to implement the processing steps shown in Figure 2, at the IEC 62386-102 symbol encoding rate.

In the case of IEC 62386-102, a search for 24-bit random numbers is used as a means to identify devices not previously detected on the serial link. Each device that is identified is then assigned a "short address" unique to that device on that serial link; thereafter, the short address is used to communicate with that device.

In systems containing IEC 62386-102 devices, a need often arises to detect both previously unidentified devices and the disappearance of previously identified devices. For example, this permits the case of removal of a failed device and insertion of a replacement device to be detected and also allows the replacement device to be assigned the short address previously assigned to the failed device. Just as in the case of a search for new random numbers, a search to detect the continued presence or disappearance of previously identified IEC 62386-102 devices can be accomplished using techniques according to IEC 62386-102, but only slowly. According to the preferred embodiments of the present invention, detection of the presence of previously identified devices and/or previously unidentified devices can be carried out significantly more quickly. The parameter disclosed is a compound value consisting of the random number plus the short address, where the short address encoding allows a value "not assigned a short address" to be encoded in place of a short address value; this compound value can be encoded using 31 bits.

It will be understood that the relative savings in search time produced by the preferred embodiments of the present invention will be the greater as the number of bits used to encode the value being disclosed increases. The benefits in general will be the greater the sparser the values are. Nevertheless, this invention may be applied to searching for parameter values of any encoding length, interpretation or degree of sparseness.

It may be that all of the devices in the system can both interrogate other devices, by transmitting requests for other devices to disclose values of parameters held by the devices, and respond to such requests. On the other hand, it may be that only one device or only some of the devices in the system can interrogate other devices (and may or may not be configured to respond to such requests), whereas all of the other devices are not capable of issuing such requests and instead only respond to such requests.

Examples of use of this invention have been given relating to systems distributed around a building, in particular discrete devices distributed around a building. However, the invention may be applied to systems of greater size and to systems of smaller size. For example, the devices comprising the system may be very far apart and linked using very long distance telemetry links. One suitable realisation of the serial link in this case would be low frequency radio transmission with symbol encoding rate long enough for all devices in the system to detect other transmissions within a symbol encoding period.

Although embodiments of the invention described herein principally comprise computer processes performed in computer apparatus and computer apparatus per se, in combination with other electrical or electronic apparatus, the invention also extends to computer programs, particularly computer programs on or in a carrier, adapted for putting the invention into practice. The program may be in the form of source code, object code, a code intermediate source or object code such as in a partially compiled form, or in any other form suitable for use in implementation of the processes according to the invention. The carrier may be any entity or device capable of carrying the program. For example, the carrier may comprise a storage medium, such as a ROM, for example a CD ROM or a semiconductor ROM, or a magnetic recording medium, for example a hard disk.

Embodiments of the present invention have been described with particular reference to examples illustrated schematically in the drawings. However, it will be understood that variations and modifications may be made to the examples described within the scope of the present invention.

## Claims

1. A method of learning values of one or more parameters held by a plurality of lighting control devices that are capable of communication with each other via a serial communications link, the method comprising:
(A) one of said lighting control devices issuing a request over the serial communications link for said lighting control devices to disclose over the serial communications link a value of a parameter held by the devices; and,
(B) in response thereto, each of the devices that hold such a value and that have been requested to disclose the value attempting to disclose the value held by the device, while monitoring for attempts by other devices to disclose values held by the other devices, each device operating a comparator rule whereby if a device learns that another of the devices is transmitting a value that is preferred to the value that is being transmitted by said device, then said device ceases transmitting its value, so that at most one value is disclosed in response to each request; and
repeating (A) and (B) such that a plurality of said devices that hold such a value and that have been requested to disclose the value have disclosed the value such that said requesting device learns the values of the parameter held by said plurality of devices.

2. A method according to claim 1, wherein each device operates a comparator rule whereby if a device holds plural values for a parameter, the device transmits a preferred one of said values in response to the request.

3. A method according to claim 1 or claim 2, wherein the request for said devices to disclose a parameter held by the devices includes or is accompanied by a restriction on the devices that are to respond to said request such that only a subset of the devices respond to said request.

4. A method according to any of claims 1 to 3, wherein each device is able to recognise during a symbol period when some other device has a superior bit to transmit and where a device that would otherwise transmit an inferior bit does not prevent other devices from detecting the transmission of the superior bit.

5. A method according to any of claims 1 to 4, wherein a parameter to be disclosed is one of an IEC 62386-102 random number, a compound value consisting of plural elements, and a compound value consisting of an IEC 62386-102 random number and an IEC 62386-102 short address.

6. A method according to any of claims 1 to 5, wherein the devices are discrete devices distributed around a building.

7. Apparatus comprising a plurality of discrete lighting control devices that are distributed around a building and capable of communication with each other via a serial communications link, wherein the lighting control devices are arranged such that:
at least one of said devices is able to issue a request over the serial communications link for said devices to disclose over the serial communications link a value of a parameter held by the devices; and,
in response thereto, each of the devices that hold such a value and that have been requested to disclose the value attempts to disclose the value held by the device, while monitoring for attempts by other devices to disclose values held by the other devices, each device operating a comparator rule whereby if a device learns that another of the devices is transmitting a value that is preferred to the value that is being transmitted by said device, then said device ceases transmitting its value, so that at most one value is disclosed in response to each request;
said at least one of said devices being arranged to repeat said request over the serial communications link for said devices to disclose over the serial communications link a value of a parameter held by the devices such that a plurality of said devices that hold such a value and that have been requested to disclose the value have disclosed the value;
thereby enabling one or more of the devices to learn the values of the parameter held by a plurality of the devices.

8. Apparatus according to claim 7, wherein each device operates a comparator rule whereby if a device holds plural values for a parameter, the device transmits a preferred one of said values in response to the request.

9. Apparatus according to claim 7 or claim 8, wherein the request for said devices to disclose a parameter held by the devices includes or is accompanied by a restriction on the devices that are to respond to said request such that only a subset of the devices respond to said request.

10. Apparatus according to any of claims 7 to 9, wherein a parameter to be disclosed is one of an IEC 62386-102 random number, a compound value consisting of plural elements, and a compound value consisting of an IEC 62386-102 random number and an IEC 62386-102 short address.

## Patentansprüche

1. Verfahren zum Erlernen von Werten eines oder mehrerer Parameter, die von einer Vielzahl von Beleuchtungssteuervorrichtungen, die geeignet sind, miteinander mittels einer seriellen Kommunikationsverbindung zu kommunizieren, vorgehalten werden, wobei das Verfahren aufweist:
(A) Ausgeben einer Anfrage durch eine der Beleuchtungssteuervorrichtungen über die serielle Kommunikationsverbindung an die Beleuchtungssteuervorrichtungen, um über die serielle Kommunikationsverbindung einen Wert eines Parameters, der von den Vorrichtungen vorgehalten wird, mitzuteilen; und
(B) als Antwort darauf Versuchen durch jede der Vorrichtungen, die einen solchen Wert vorhält und die angefragt wurde, den Wert mitzuteilen, den Wert, der von der Vorrichtung vorgehalten wird, mitzuteilen, während sie Versuche von anderen Vorrichtungen, Werte, die von den anderen Vorrichtungen vorgehalten werden, mitzuteilen, beobachtet, wobei jede Vorrichtung eine Vergleichsregel anwendet, wobei, wenn eine Vorrichtung erlernt, dass eine andere der Vorrichtungen einen Wert überträgt, der bevorzugt wird zu dem Wert, den die Vorrichtung überträgt, die Vorrichtung das Übertragen ihres Wertes beendet, sodass höchstens ein Wert als Antwort auf jede Anfrage mitgeteilt wird; und
Wiederholen von (A) und (B), sodass eine Vielzahl der Vorrichtungen, die solch einen Wert vorhalten und die angefragt wurden, den Wert mitzuteilen, den Wert mitgeteilt hat, sodass die anfragende Vorrichtung die Werte der Parameter, die von der Vielzahl von Vorrichtungen vorgehalten werden, erlernt.

2. Verfahren nach Anspruch 1, wobei jede Vorrichtung eine Vergleichsregel anwendet, wobei, wenn eine Vorrichtung mehrere Werte für einen Parameter vorhält, die Vorrichtung einen bevorzugten dieser Werte als Antwort auf die Anfrage überträgt.

3. Verfahren nach Anspruch 1 oder 2, wobei die Anfrage an die Vorrichtungen einen Parameter, der von den Vorrichtungen vorgehalten wird, mitzuteilen, eine Beschränkung für die Vorrichtungen, die auf die Anfrage zu antworten haben, umfasst oder beifügt, sodass nur eine Untermenge der Vorrichtungen auf die Anfrage antwortet.

4. Verfahren nach einem der Ansprüche 1 bis 3, wobei jede Vorrichtung in der Lage ist, während einer Zeichenperiode zu erkennen, wenn irgendeine andere Vorrichtung ein übergeordnetes Binärzeichen zu übertragen hat, und wobei eine Vorrichtung, die anderenfalls ein untergeordnetes Binärzeichen übertragen würde, andere Vorrichtungen nicht vom Erfassen der Übertragung des übergeordneten Binärzeichens abhält.

5. Verfahren nach einem der Ansprüche 1 bis 4, wobei ein mitzuteilender Parameter ausgewählt aus einer Gruppe bestehend aus einer IEC-62386-102-Zufallszahl, einem Mischwert, bestehend aus mehreren Elementen, und einem Mischwert, bestehend aus einer IEC-62386-102-Zufallszahl und einer IEC-62386-102-Kurzadresse, ist.

6. Verfahren nach einem der Ansprüche 1 bis 5, wobei die Vorrichtungen separate Vorrichtungen, verteilt um ein Gebäude, sind.

7. Gerät, das eine Vielzahl eigenständiger Beleuchtungssteuervorrichtungen aufweist, die um ein Gebäude verteilt sind und die fähig sind, miteinander mittels einer seriellen Kommunikationsverbindung zu kommunizieren, wobei die Beleuchtungssteuervorrichtungen so eingerichtet sind, dass:
wenigstens eine der Vorrichtungen in der Lage ist, eine Anfrage über die serielle Kommunikationsverbindung an die Vorrichtungen auszugeben, einen Wert eines Parameters, der von den Vorrichtungen vorgehalten wird, über die serielle Kommunikationsverbindung mitzuteilen; und
als Antwort darauf, jede der Vorrichtungen, die solch einen Wert vorhält und die angefragt wurde, den Wert mitzuteilen, versucht, den Wert, der von der Vorrichtung vorgehalten wird, mitzuteilen, während sie Versuche von anderen Vorrichtungen, Werte, die von den anderen Vorrichtungen vorgehalten werden, mitzuteilen, beobachtet, wobei jede Vorrichtung eine Vergleichsregel anwendet, wobei, wenn eine Vorrichtung erlernt, dass eine andere der Vorrichtungen einen Wert überträgt, der bevorzugt wird zu dem Wert, den die Vorrichtung überträgt, die Vorrichtung das Übertragen ihres Wertes beendet, sodass höchstens ein Wert als Antwort auf jede Anfrage mitgeteilt wird;
wenigstens eine der Vorrichtungen eingerichtet ist, die Anfrage über die serielle Kommunikationsverbindung an die Vorrichtungen, einen Wert eines Parameters, der von den Vorrichtungen vorgehalten wird, über die serielle Kommunikationsverbindung mitzuteilen, zu wiederholen, sodass eine Vielzahl der Vorrichtungen, die einen solchen Wert vorhalten und bei denen angefragt wurde, den Wert mitzuteilen, den Wert mitgeteilt hat;
wobei es einer oder mehreren der Vorrichtungen ermöglicht wird, die Werte der Parameter, die von einer Vielzahl der Vorrichtungen vorgehalten werden, zu erlernen.

8. Gerät nach Anspruch 7, wobei jede Vorrichtung eine Vergleichsregel anwendet, wobei, wenn eine Vorrichtung mehrere Werte für einen Parameter vorhält, die Vorrichtung einen bevorzugten dieser Werte als Antwort auf die Anfrage überträgt.

9. Gerät nach Anspruch 7 oder 8, wobei die Anfrage an die Vorrichtungen einen Parameter, der von den Vorrichtungen vorgehalten wird, mitzuteilen, eine Beschränkung für die Vorrichtungen, die auf die Anfrage zu antworten haben, umfasst oder beifügt, sodass nur eine Untermenge der Vorrichtungen auf die Anfrage antwortet.

10. Gerät nach einem der Ansprüche 7 bis 9, wobei ein mitzuteilender Parameter ausgewählt aus einer Gruppe bestehend aus einer IEC-62386-102-Zufallszahl, einem Mischwert, bestehend aus mehreren Elementen, und einem Mischwert, bestehend aus einer IEC-62386-102-Zufallszahl und einer IEC-62386-102-Kurzadresse, ist.

## Revendications

1. Procédé d'apprentissage de valeurs d'un ou plusieurs paramètres détenus par une pluralité d'appareils de commande d'éclairage qui sont capables de communiquer entre eux via une liaison de communication série, le procédé comprenant :
(A) le fait qu'un desdits appareils de commande d'éclairage émet une demande sur la liaison de communication série pour lesdits appareils de communiquer sur la liaison de communication série une valeur d'un paramètre détenu par les appareils ; et,
(B) en réponse à celle-ci, le fait que chacun des appareils qui détiennent une telle valeur et auxquels il a été demandé de communiquer la valeur tente de communiquer la valeur détenue par l'appareil, tout en surveillant des tentatives d'autres appareils de communiquer des valeurs détenues par les autres appareils, chaque appareil mettant en œuvre une règle de comparaison selon laquelle, si un appareil apprend qu'un autre des appareils est en train de transmettre une valeur qui est préférée à la valeur qui est en cours de transmission pour ledit appareil, alors ledit appareil cesse de transmettre sa valeur, de manière qu'au maximum une valeur soit communiquée en réponse à chaque demande ; et
la répétition de (A) et (B) de manière qu'une pluralité desdits appareils qui détiennent une telle valeur et auxquels il a été demandé de communiquer la valeur ait communiqué la valeur de manière que ledit appareil demandeur apprenne les valeurs du paramètre détenu par ladite pluralité d'appareils.

2. Procédé selon la revendication 1, dans lequel chaque appareil met en œuvre une règle de comparaison selon laquelle, si un appareil détient plusieurs valeurs pour un paramètre, l'appareil transmet une préférée desdites valeurs en réponse à la demande.

3. Procédé selon la revendication 1 ou la revendication 2, dans lequel la demande pour lesdits appareils de communiquer un paramètre détenu par les appareils comprend ou est accompagnée d'une restriction sur les appareils qui doivent répondre à ladite demande de manière que seul un sous-ensemble des appareils réponde à ladite demande.

4. Procédé selon l'une quelconque des revendications 1 à 3, dans lequel chaque appareil est en mesure de reconnaître durant une période de symbole quand un autre appareil a un bit supérieur à transmettre et où un appareil qui transmettrait autrement un bit inférieur n'empêche pas d'autres appareils de détecter la transmission du bit supérieur.

5. Procédé selon l'une quelconque des revendications 1 à 4, dans lequel un paramètre destiné à être communiqué est un parmi un nombre aléatoire IEC 62386-102, une valeur composée constituée de plusieurs éléments, et une valeur composée constituée d'un nombre aléatoire IEC 62386-102 et d'une adresse courte IEC 62386-102.

6. Procédé selon l'une quelconque des revendications 1 à 5, dans lequel les appareils sont des appareils discrets distribués autour d'un bâtiment.

7. Dispositif comprenant une pluralité d'appareils de commande d'éclairage discrets qui sont distribués autour d'un bâtiment et capables de communiquer entre eux via une liaison de communication série, dans lequel les appareils de commande d'éclairage sont agencés de manière que :
au moins un desdits appareils soit en mesure d'émettre une demande sur la liaison de communication série pour lesdits appareils de communiquer sur la liaison de communication série une valeur d'un paramètre détenu par les appareils ; et
en réponse à celle-ci, chacun des appareils qui détiennent une telle valeur et auxquels il a été demandé de communiquer la valeur tente de communiquer la valeur détenue par l'appareil, tout en surveillant des tentatives d'autres appareils de communiquer des valeurs détenues par les autres appareils, chaque appareil mettant en œuvre une règle de comparaison selon laquelle, si un appareil apprend qu'un autre des appareils est en train de transmettre une valeur qui est préférée à la valeur qui est en cours de transmission par ledit appareil, alors ledit appareil cesse de transmettre sa valeur, de manière qu'au maximum une valeur soit communiquée en réponse à chaque demande ;
ledit au moins un desdits appareils étant agencé pour répéter ladite demande sur la liaison de communication série pour lesdits appareils de communiquer sur la liaison de communication série une valeur d'un paramètre détenu par les appareils de manière qu'une pluralité desdits appareils qui détiennent une telle valeur et auxquels il a été demandé de communiquer la valeur aient communiqué la valeur ;
en permettant ainsi à un ou plusieurs des appareils d'apprendre les valeurs du paramètre détenu par une pluralité d'appareils.

8. Dispositif selon la revendication 7, dans lequel chaque appareil met en œuvre une règle de comparaison selon laquelle, si un appareil détient plusieurs valeurs pour un paramètre, l'appareil transmet une préférée desdites valeurs en réponse à la demande.

9. Dispositif selon la revendication 7 ou la revendication 8, dans lequel la demande pour lesdits appareils de communiquer un paramètre détenu par les appareils comprend ou est accompagnée d'une restriction sur les appareils qui doivent répondre à ladite demande de manière que seul un sous-ensemble des appareils réponde à ladite demande.

10. Dispositif selon l'une quelconque des revendications 7 à 9, dans lequel un paramètre destiné à être communiqué est un parmi un nombre aléatoire IEC 62386-102, une valeur composée constituée de plusieurs éléments, et une valeur composée constituée d'un nombre aléatoire IEC 62386-102 et d'une adresse courte IEC 62386-102.
